(19) Europäisches Patentamt / European Patent Office / Office européen des brevets

(11) **EP 3 205 070 B1**

(12) **FASCICULE DE BREVET EUROPEEN**

(45) Date de publication et mention de la délivrance du brevet:
**11.08.2021 Bulletin 2021/32**

(51) Int Cl.:
**H04L 29/06** (2006.01)      **H04L 29/08** (2006.01)
**H04L 12/46** (2006.01)

(21) Numéro de dépôt: **15791691.7**

(22) Date de dépôt: **06.10.2015**

(86) Numéro de dépôt international:
**PCT/FR2015/052681**

(87) Numéro de publication internationale:
**WO 2016/055730 (14.04.2016 Gazette 2016/15)**

(54) **SYSTÈME DE RÉSEAU EMBARQUÉ DE VÉHICULE ET PROCÉDÉ DE DÉTECTION D'INTRUSION SUR LE RÉSEAU EMBARQUÉ**

BORDNETZSYSTEM FÜR FAHRZEUG UND VERFAHREN ZUR EINDRINGUNGSERKENNUNG BEI DEM BORDNETZ

ON-BOARD VEHICLE NETWORK SYSTEM AND METHOD FOR DETECTING INTRUSIONS ON THE ON-BOARD NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2014 FR 1459640**

(43) Date de publication de la demande:
**16.08.2017 Bulletin 2017/33**

(73) Titulaires:
• **Renault s.a.s**
  **92100 Boulogne-Billancourt (FR)**
• **Centre National de la Recherche Scientifique (CNRS)**
  **75016 Paris (FR)**

(72) Inventeurs:
• **STUDNIA, Ivan**
  **F-78000 Versailles (FR)**
• **LAAROUCHI, Youssef**
  **F-78180 Montigny Le Bretonneux (FR)**
• **NICOMETTE, Vincent**
  **F-31450 Pompertuzat (FR)**
• **ALATA, Eric**
  **F-34520 Ramonville Saint Agne (FR)**
• **KAANICHE, Mohamed**
  **F-31300 Toulouse (FR)**

(56) Documents cités:
**WO-A1-2013/093591      US-A1- 2008 052 780**

• **SEIFERT STEFAN ET AL: "Secure automotive gateway - Secure communication for future", 2014 12TH IEEE INTERNATIONAL CONFERENCE ON INDUSTRIAL INFORMATICS (INDIN), IEEE, 27 juillet 2014 (2014-07-27), pages 213-220, XP032677266, DOI: 10.1109/INDIN.2014.6945510**
• **None**

**Description**

L'invention concerne un système ordinateur pour contrôler et commander des organes de véhicule automobile comprenant des calculateurs embarqués connectés au sein d'un réseau embarqué de communication de véhicule et un procédé de détection en temps réel d'intrusion dans le réseau embarqué de communication pour une utilisation sécurisée du système ordinateur.

Il est possible depuis longtemps d'écouter et d'émettre des messages sur les réseaux embarqués dans une automobile par exemple en interfaçant directement un ordinateur avec le ou l'un des bus du réseau, ou par exemple encore en passant par un port OBD. On rappelle que le port OBD (acronyme de On Board Diagnostics en anglais qui signifie Diagnostic A Bord) permet notamment aux services après-vente d'un constructeur automobile d'observer le système du véhicule, par exemple en branchant une prise de diagnostic sur un connecteur habituellement prévu à cet effet. Ces manières d'accéder à l'intérieur du système requièrent un accès physique prolongé au réseau du véhicule, ce qui peut constituer un gage de sécurité.

Ainsi, les protocoles réseaux actuellement employés dans un véhicule du monde automobile étant pensés pour fonctionner en système fermé, ceux-ci ne possèdent pas de réel mécanisme pour prévenir des intrusions. Aussi suffit-il d'obtenir un accès à un bus de réseau du véhicule et de posséder les connaissances techniques nécessaires, pour contrôler les calculateurs embarqués présents sur ce réseau. Peu importe sa provenance, un message qui respecte les spécifications de messagerie du réseau, est alors accepté par les calculateurs embarqués auxquels il est adressé.

Cependant, la présence d'un nombre toujours plus considérable de mécanismes de communication largement répandus (USB, Bluetooth, WiFi, 3G ...) entre le véhicule et des équipements extérieurs, rend hasardeux de considérer que le système ordinateur du véhicule est un système fermé. Pour donner un bref aperçu de différents points d'entrée potentiels sur le réseau, on peut citer à titre illustratif les communications de véhicule à véhicule, l'équipement multimédia de bord pour écouter des chaînes de radiodiffusion ou le contenu d'un support mémoire, le kit main libre pour ouvrir et fermer le véhicule à distance et/ou le démarrer, l'équipement télématique pour communiquer avec des systèmes extérieurs distants par Internet ou téléphonie mobile.

Les points d'entrée évoqués ci-dessus et bien d'autres encore, constituent de nouvelles interfaces propres à attiser la curiosité de certains pirates informatiques qui cherchent à exploiter les vulnérabilités qui peuvent être présentes dans la mise en œuvre du système ordinateur du véhicule. Dans l'article « Comprehensive Experimental Analyses of Automotive Attack Surfaces» de Checkoway et al., USENIX Security, 10-12 Août 2011, une équipe de chercheurs a par exemple réussi à identifier de telles vulnérabilités logicielles dans les calculateurs embarqués gérant les communications 3G ou Bluetooth, ce qui leur a permis de forcer ces calculateurs à émettre des paquets de leur choix sur le bus, et par suite de contrôler à distance différents organes du véhicule, allant jusqu'à le démarrer.

Des attaques semblables à celles relatées dans l'article sont rendues possibles à cause d'erreurs dans les logiciels gérant les communications à distance. Il existe certes des moyens de se prémunir contre ceci, à commencer par exiger de bonnes pratiques de codage, mais il est également difficile de s'assurer que le système alors mis en œuvre est parfaitement imperméable aux attaques. C'est pourquoi un besoin se fait sentir d'installer une seconde « ligne de défense » en se plaçant au plus près du réseau.

On connait déjà des procédés de détection d'intrusion dans les gros systèmes informatiques en réseau mais les procédés connus ne sont pas adaptés au monde automobile.

Par exemple le brevet EP2040435B1 publié le 6 novembre 2013, enseigne un procédé antérieur comprenant des étapes consistant à capturer des données liées au système ciblé, puis à comparer les données capturées à des signatures d'attaques afin de générer une alerte de sécurité lorsque les données capturées correspondent à une signature d'attaque. Cependant, pour générer une alarme de sécurité vérifiée, le procédé antérieur nécessite de capturer des données d'assurance à partir de la surveillance d'un périmètre ciblé puis de générer des informations d'assurance de façon à vérifier une correspondance avec des conditions préalables. La double surveillance imposée par le procédé antérieur est source de problèmes dans un système embarqué temps réel tel qu'on en rencontre sur un véhicule.

Par exemple aussi le brevet EP1085447B1 publié le 18 octobre 2006, enseigne un procédé antérieur comprenant notamment une étape de formulation de conditions d'audit que l'on veut détecter à l'aide de formules de spécification, exprimant des schémas d'attaque ou d'intrusion frauduleuse, à vérifier par l'examen d'enregistrements du fichier compte-rendu du système informatique. Le procédé antérieur basé sur des enregistrements, relève d'un examen a posteriori qui pose problème pour sécuriser sans délai un système embarqué temps réel comme on peut en rencontrer sur un véhicule dans lequel la sécurité du système impacte directement la sécurité des passagers du véhicule.

Par exemple encore le brevet EP2214115B1 publié le 25 mai 2011, enseigne un procédé antérieur comprenant notamment une réception de paquet suivi d'une exploration d'un automate fini déterministe de groupe afin de déterminer si le paquet inclut un segment d'expression rationnelle explosive défini par une empreinte de signature pour ensuite identifier une application réseau à laquelle le paquet appartient. La nécessité de recourir à une application identifiée dans le procédé antérieur, si elle peut s'avérer utile pour détecter certaines intrusions dans le monde Internet, est source de problèmes non seulement pour détecter des intrusions au niveau de couches réseau basses dans lesquels le caractère intrusif d'un paquet est ou n'est pas lié à une application identifiable mais aussi source de problèmes pour détecter des intrusions rapidement au sens de ce que demande une exécution en temps réel comme on en rencontre sur un véhicule.

La publication WO 2013/093591 A1 divulgue un réseau de véhicule avec un appareil de contrôle embarqué qui détecte des données illicites en surveillant le format de communication de données, prédétermine pour exécuter un protocole de communication dans le réseau de véhicule. C'est en détectant des données illicites dont le format de communication est différent de celui prescrit que l'appareil déclenche des actions de protection.

La publication US 2008/052780 A1 divulgue un procédé de détection d'événement consistant à prédéfinir des règles de détection avec une grammaire algébrique, générer une table d'analyse d'automate fini qui supporte l'analyse parallèle, et analyser un événement à détecter au moyen de la table pour obtenir le résultat de détection.

Un autre problème est celui de possibles détections intempestives d'intrusions qui ne prête pas nécessairement à conséquence grave dans les procédés de traitement de l'information pure tels que ceux mentionnés ci-dessus, sans interaction directe avec l'environnement physique. Une détection intempestive nuirait au contraire au bon fonctionnement du véhicule dans le cas d'un réseau embarqué de communication de véhicule dont l'objectif connu est celui d'interagir avec des organes du véhicule.

Pour remédier aux problèmes de l'état antérieur de la technique, l'invention a pour objet un procédé de détection en temps réel d'intrusion dans un réseau embarqué de communication de véhicule selon la revendication 1.

De la sorte, le procédé qui fait l'objet de l'invention est capable de détecter rapidement une intrusion dès que l'observation du flux révèle un message prohibé sans avoir à effectuer une double surveillance. De plus la détection d'intrusion est réalisable en temps réel sans avoir à passer par une phase d'enregistrement ou à remonter à un niveau applicatif complexe. En outre, le procédé permet d'éviter des détections intempestives tant que le dernier message de séquence interdite ne révèle pas un message prohibé.

Au moins une structure de données accédée en mémoire dudit au moins un calculateur, comporte un langage formel proscrit comprenant un alphabet de symboles identifiant chacun un message conforme à une ou plusieurs spécifications organiques du véhicule et un ensemble de mots proscrits qui sont extérieurs à un langage formel régulier comprenant le même alphabet de symboles que le langage formel proscrit et un ensemble de mots réguliers chacun conforme à au moins une spécification fonctionnelle du véhicule.

De la sorte, le procédé est capable de détecter une intrusion même lorsque chaque message observé pris individuellement, est conforme à au moins une spécification organique, en d'autres termes, le message observé à chaque instant respecte les règles de messagerie du réseau embarqué. Cependant une séquence de messages conformes qui n'appartient pas aux séquences conformes de messages conformes, est candidate à une détection d'intrusion qui n'aurait pas lieu si on se contentait d'analyser chaque message pris individuellement. L'identification de chaque message par un symbole est propice à un traitement rapide et économe en ressources mémoire.

Ladite structure de données met en œuvre ledit langage formel proscrit au moyen d'un automate enregistré en mémoire dudit au moins un calculateur embarqué, comprenant des transitions associées chacune à un symbole de l'alphabet et au moins un état terminal accessible par une chaîne de transitions validée par l'un desdits mots proscrits.

L'automate enregistré permet un traitement avantageusement compact du procédé en mémoire.

Encore plus particulièrement, l'automate enregistré est obtenu préalablement à partir d'un produit synchrone d'automates élémentaires associés chacun à une spécification organique du véhicule.

Plus particulièrement aussi, l'ensemble de mots proscrits comprend un premier ensemble de mots obtenus chacun par une concaténation de préfixe de mot régulier à un symbole de l'alphabet et qui n'appartiennent pas à l'ensemble de mots réguliers.

Ainsi, le symbole identifie un message prohibé du fait qu'il crée une rupture de séquence de messages identifiable par un mot régulier.

Avantageusement, l'ensemble de mots proscrits comprend un deuxième ensemble de mots obtenus en prenant les suffixes de mots du premier ensemble qui n'appartiennent pas à un ensemble de radicaux de mots réguliers.

On remarquera que le deuxième ensemble inclut le premier ensemble avec pour effet technique supplémentaire d'être capable de détecter une séquence interdite en cas d'interruption passagère dans l'observation du flux de messages circulant sur le réseau embarqué.

Particulièrement aussi, au moins une structure de données accédée en mémoire dudit au moins un calculateur, comporte un compteur de messages non conformes aux spécifications organiques du véhicule associé à un seuil de comptage dont une atteinte ou un dépassement déclare interdite la séquence de messages contenus dans le compteur.

De la sorte, une détection intempestive d'intrusion est évitée en cas de message accidentellement non conforme aux spécifications organiques du véhicule. Néanmoins le procédé permet de détecter une intrusion par des messages non conformes qui échappent à l'identification par un symbole en cas de répétition de tels messages.

L'invention a aussi pour objet un programme de système ordinateur comprenant des instructions de code de programme pour l'exécution des étapes du procédé selon l'invention lorsque ledit programme est exécuté sur un système ordinateur.

L'invention a également pour objet un système ordinateur pour contrôler et commander des organes de véhicule automobile comprenant des calculateurs embarqués connectés à un ou plusieurs bus embarqués de communication, caractérisé en ce qu'il comprend au moins un calculateur connecté à au moins l'un du ou des bus embarqués et hébergeant tout ou partie du programme de système ordinateur selon l'invention.

L'invention a enfin pour objet un véhicule automobile caractérisé en ce qu'il comporte un système ordinateur selon l'invention.

D'autres caractéristiques et avantages de l'invention apparaitront au cours de la lecture de la description détaillée qui va suivre pour la compréhension de laquelle on se reportera aux dessins annexés parmi lesquels :

- la figure 1 est un schéma qui représente un véhicule équipé du système de réseau embarqué sur lequel repose l'invention ;
- les figures 2a, 2b, 2c sont des schémas de variantes d'architecture réseau possibles pour mettre en œuvre l'invention ;
- la figure 3 montre des étapes de procédé de détection d'intrusion conforme à l'invention ;
- la figure 4 montre des étapes de procédé de production d'une structure de données conforme à l'invention ;
- les figures 5 à 7 sont des schémas d'automates possiblement obtenus à différentes étapes du procédé de production.

Dans la suite de la description, des éléments présentant une structure identique ou des fonctions analogues seront désignés par un même numéro de référence.

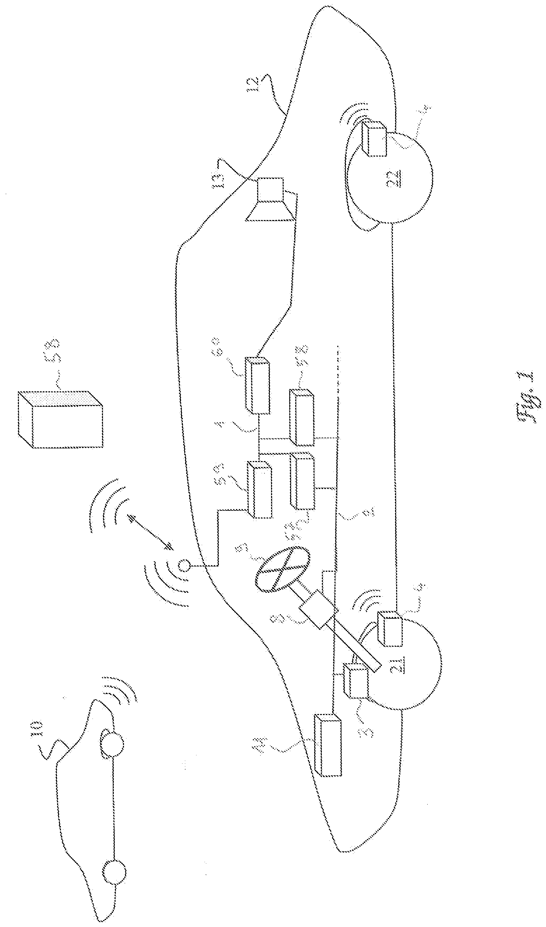

La figure **1** montre un véhicule automobile 12 équipé de manière conventionnelle de roues avant 21, de roues arrière 22 et d'un volant 9 de direction pour braquer les roues avant 21 par l'intermédiaire d'une colonne de direction 8, pour illustrer les nombreux points d'entrée possibles dans le système ordinateur embarqué qui contrôle et commande les organes du véhicule automobile. Un groupe motopropulseur (non représenté), électrique, thermique ou hybride, est piloté en accélération et en ralentissement par un calculateur embarqué 11, parfois programmé aussi par ailleurs pour communiquer via un bus embarqué 2 avec un module 8 de direction assistée électrique (DAE) pour contrôler sur la colonne de direction, un angle de braquage $\alpha$ commandé à partir du volant 9 en mode manuel ou à partir d'un module de navigation en mode autonome, hébergé par exemple dans un calculateur embarqué 60. Le module de navigation peut comporter de manière connue en soi un contrôleur de trajectoire comme par exemple mais non nécessairement celui décrit dans le document WO2014/009631. Le calculateur embarqué 60 ou un autre calculateur embarqué, peut aussi héberger un module multimédia connecté à par exemple un lecteur CD, un lecteur MP3, une clé USB pour émettre du son sur un ou plusieurs haut-parleurs 13. Le calculateur embarqué 11 est connecté par ailleurs directement ou indirectement via le bus embarqué 2 à des moyens d'action sur le véhicule 12, notamment des moyens électroniques 3 de contrôle/commande de freinage mécanique, ABS, ESP ou autres connus par ailleurs, sur les roues 21, 22 pour maintenir l'adhérence et la trajectoire. Les roues 21, 22 peuvent être équipées de modules électroniques 4 de surveillance de pression des pneus (TPMS pour Tire Pressure Monitoring System en anglais) qui envoie des informations à l'un des calculateurs embarqués généralement par liaison radio. On notera le caractère critique du bus embarqué 2 en ce qu'une communication corrompue sur ce bus risque de déclencher un comportement dangereux des organes commandés, notamment en matière de vitesse longitudinale et de vitesse latérale.

Un bus embarqué 1 de criticité moindre sur la conduite du véhicule 12 connecte ici le calculateur embarqué 60 à un calculateur embarqué 59 qui héberge un module télématique pour communiquer avec un système informatique distant 58 par liaison WIFI, Bluetooth, GSM, 3 ou 4G, satellite ou autre, largement connues de nos jours. Le calculateur embarqué 60 peut aussi gérer des communications V2X par exemple avec un autre véhicule 10 ou encore simplement la réception de données GPS (Global Positioning System en anglais).

Un calculateur embarqué 58 connecté à chacun des bus embarqués 1, 2, exécute des fonctions de passerelle entre les deux bus, par exemple pour permettre au calculateur embarqué 11 de communiquer avec le calculateur embarqué 60 et/ou le calculateur embarqué 59.

Un calculateur embarqué 57 relié à un port OBD, est connecté au bus embarqué 1 pour effectuer des fonctions de diagnostic relatives aux organes mécaniques et électriques classiques du véhicule. Le calculateur embarqué 57 est connecté au bus embarqué 2 pour effectuer des fonctions de diagnostic relatives aux capacités communicantes du véhicule.

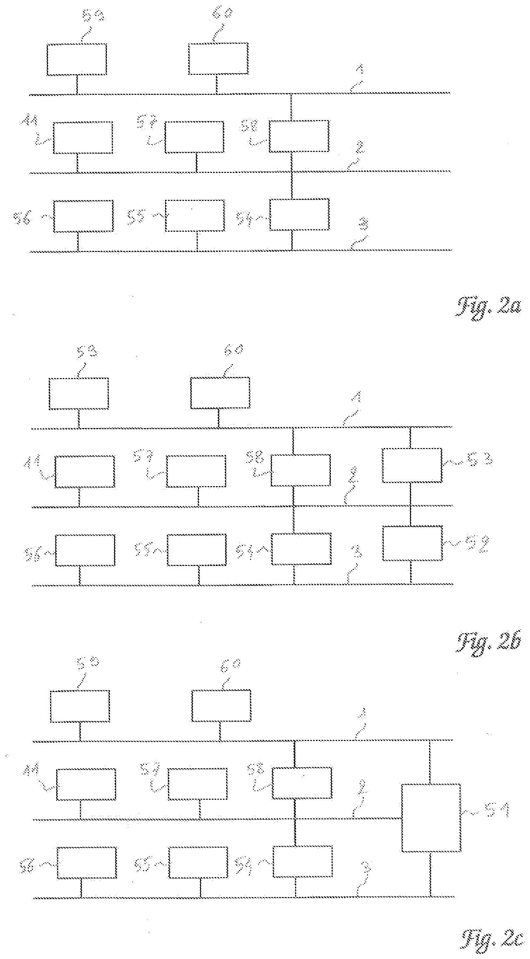

Les figures **2a, 2b, 2c,** montrent différentes alternatives de mise en œuvre d'un système ordinateur pour contrôler et commander les organes 3, 8, 4 sur un réseau embarqué du véhicule 12, comprenant des calculateurs embarqués parmi lesquels on peut reconnaître les calculateurs embarqués 11, 57, 58, 59, 60 de la figure 1 et des bus embarqués parmi lesquels on peut reconnaître les bus embarqués 1, 2 de la figure 1. D'autres calculateurs 54, 55, 56 peuvent être ou ne pas être connectés à un bus embarqué 3. Les bus embarqués sont des bus de type CAN, LIN, Ethernet pour l'automobile ou d'autre type connu dans le domaine des véhicules motorisés.

En référence à la figure **2a,** un calculateur existant du réseau héberge un programme pour l'exécution d'un procédé de détection en temps réel d'intrusions dans le réseau embarqué, comme expliqué dans la suite de la description. Le programme est par exemple hébergé dans le calculateur embarqué 54 jouant par ailleurs un rôle de passerelle entre les bus 2 et 3 de manière à pouvoir observer tant un flux de messages échangés entre les bus 2 et 3 que de messages circulant uniquement dur le bus 2 et/ou uniquement sur le bus 3. S'il est utile d'observer aussi un flux de messages circulant sur le bus 1, le calculateur 54 peut passer si besoin par le calculateur 58. Pour éviter d'augmenter le trafic de messages, on peut répartir le programme dans les calculateurs 54 et 58 comme nous le verrons par la suite.

En référence à la figure **2b,** un ou plusieurs calculateurs 52, 53 sont ajoutés au réseau de façon à héberger le programme pour l'exécution d'un procédé de détection en temps réel d'intrusions dans le réseau embarqué, comme expliqué dans la suite de la description. Le programme est par exemple hébergé au moins en partie dans le calculateur embarqué 52 connecté entre les bus 2 et 3 de manière à pouvoir observer tant un flux de messages échangés entre les bus 2 et 3 que de messages circulant uniquement sur le bus 2 et/ou uniquement sur le bus 3. S'il est utile d'observer aussi un flux de messages circulant sur le bus 1, le calculateur 53 connecté au moins au bus 1 peut exécuter une partie du programme plus particulièrement dédiée au flux de messages circulant sur le bus 1.

En référence à la figure **2c,** un calculateur 51 est ajouté au réseau de façon à héberger le programme pour l'exécution du procédé de détection en temps réel d'intrusions dans le réseau embarqué, en le connectant à l'ensemble des bus 1, 2, 3 du réseau. Le programme est alors hébergé au moins en partie dans le calculateur embarqué 51 de manière à pouvoir observer tant un flux de messages échangés entre les bus 1 et 2 ou 2 et 3 que de messages circulant uniquement sur le bus 1, uniquement sur le bus 2 et/ou uniquement sur le bus 3.

On comprendra que les différentes alternatives exposées ci-dessus peuvent être combinées en exécutant par exemple certaines parties de programme dans un ou plusieurs calculateurs existants et d'autres parties du programme dans un ou plusieurs calculateurs ajoutés.

On comprendra aussi que l'architecture de réseau ci-dessus exposée, l'est purement à titre illustratif et que l'invention est applicable à tout type d'architecture de réseau du domaine des véhicules motorisés comme par exemple l'architecture connue de type EVITA (acronyme de E-safety Vehicle Intrusion proTected Applications pour désigner en anglais un projet européen sur la sécurité du traitement de données appliquée à l'automobile).

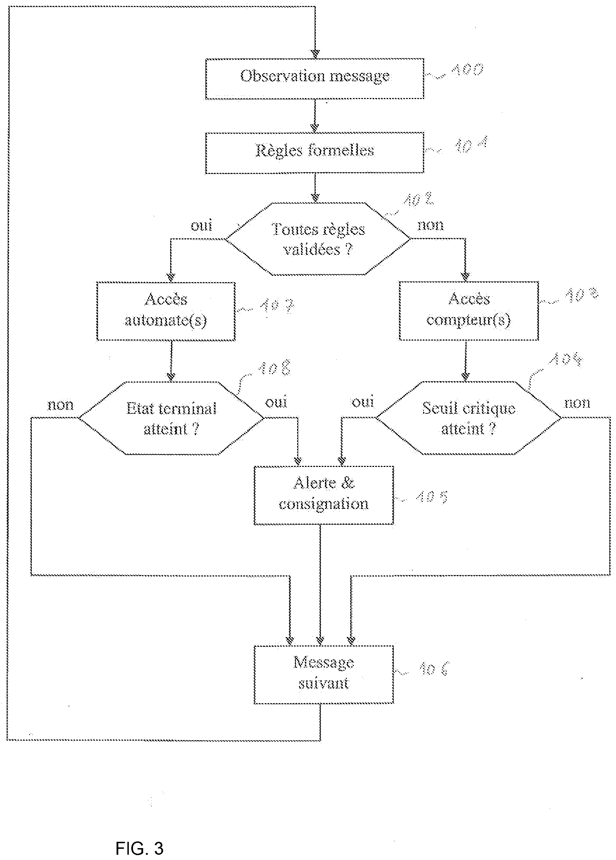

Le programme ci-dessus mentionné comprend des instructions de code de programme pour l'exécution des étapes du procédé expliqué à présent en référence à la figure 3.

De façon à observer un flux de messages circulant sur le réseau embarqué, le procédé reboucle en permanence sur une étape 100 qui consiste à observer un message qui circule à chaque instant d'observation.

Une étape 101 succède à l'étape 100 pour vérifier si toutes les règles de conformité sont validées à propos du message. Les règles comprennent celles qui sont par exemple en rapport avec l'entête d'identification du message, la taille du corps de message, le contrôle de parité ou autre. A titre illustratif un bus CAN (Controler Area Network en anglais), effectue un multiplexage de signaux préalablement répertoriés dans une spécification organique du véhicule et véhiculés chacun dans un message constitué d'une trame de bits avec un état bas récessif de bit à 1 et un état haut dominant de bit à zéro de manière à définir dans l'entête du message à la fois un identificateur et un ordre de priorité conforme à la spécification organique pour garantir la meilleure exécution en temps réel de la spécification fonctionnelle exécutée par les calculateur du réseau. Dans ce cas un identificateur non répertorié constitue une violation de règle. Une autre violation de règle est celle d'un corps de message non conforme à son identificateur lorsqu'il est répertorié. De façon plus générale, les règles à valider comprennent celles définies dans un protocole de messagerie associé au bus considéré.

On rappelle que de manière connue en soi, une spécification organique de véhicule, élaborée à partir d'une spécification fonctionnelle, spécifie comme son nom l'indique, les organes du véhicule comprenant les capteurs, actionneurs et afficheurs du véhicule et en outre spécifie comment ses organes sont organisés pour fonctionner au moyen d'échanges de signaux et de calculateurs pour traiter ces signaux.

On rappelle que de manière connue en soi, une spécification fonctionnelle de véhicule, élaborée à partir d'un cahier des charges, spécifie comme son nom l'indique, les fonctions réalisées au sein du véhicule, en d'autres termes la manière de fonctionner du véhicule.

Il peut exister une spécification fonctionnelle unique globale à l'ensemble du fonctionnement du véhicule. Il peut aussi exister plusieurs spécifications fonctionnelles propres chacune à une fonction particulière du véhicule, par exemple essuyage vitres, navigation, régulation de vitesse, éclairage, etc.

De même il peut exister une spécification organique unique globale à l'ensemble des organes du véhicule. Il peut aussi exister plusieurs spécifications organiques propres chacune à un ensemble d'organes du véhicule liés ou non fonctionnellement ou localement entre eux.

Une étape 102 génère alors une réponse positive si toutes les règles sont validées et une réponse négative dès qu'une règle n'est pas validée.

Une première variante du procédé prend en compte le fait qu'une invalidation de règle peut signifier une fragilité aux intrusions sans pour autant être réellement liée à une intrusion, par exemple en cas de variation électrique momentanée sur le câblage du réseau ou sur l'alimentation d'un calculateur dans un environnement naturellement fortement perturbé comme l'est celui d'un véhicule et ceci malgré les nombreuses précautions prises qui, diminuant fortement la probabilité de tels incidents, ne la réduisent pas nécessairement à zéro pour la totalité des événements matériels pouvant survenir.

Une réponse négative à l'étape 102 active alors une étape 103 qui consiste à accéder en mémoire d'un calculateur embarqué du véhicule à une structure de données qui comporte un compteur de messages non conformes aux spécifications organiques du véhicule. Le compteur est incrémenté à chaque passage dans l'étape 103 suite à une réponse négative de l'étape 102, c'est-à-dire pour chaque message observé qui ne respecte pas toutes les règles de messagerie.

Après augmentation de la valeur du compteur dans l'étape 103, une étape 104 vérifie si la valeur du compteur atteint un seuil critique. Le niveau du seuil critique est déterminé soit en phase d'étude en prenant en compte des considérations statistiques sur les taux d'erreur connus pour le type de bus considéré, soit en phase d'essai en partant d'un niveau de seuil assez bas pour provoquer des atteintes de seuil fréquentes puis à le remonter jusqu'à ne plus atteindre d'atteintes en environnement confiné au regard d'intrusions potentielles.

Une étape 106 activée en cas de réponse négative à l'étape 104 reboucle sur l'étape 100 pour passer à l'observation du message suivant, par exemple en vidant une pile de type FIFO (premier entré, premier sorti).

La suite continue ou discontinue de messages observés qui ont activé l'étape 103 pour règle invalidée, lorsque le seuil critique est atteint, constitue une séquence interdite, souvent discontinue, pour laquelle le dernier message observé du flux révèle une prohibition en matière de danger d'intrusion potentielle. Une réponse positive à l'étape 104 active alors une étape 105 qui génère une alerte à destination du conducteur du véhicule et/ou du système de contrôle commande du véhicule pour déclencher des procédures de protection actives pouvant aller jusqu'à arrêter le véhicule si besoin. De préférence, l'étape 105 génère une consignation de la séquence interdite et/ou de l'état du véhicule en vue d'une analyse ultérieure de la détection d'intrusion indiquée par l'étape 105.

Dans une mise en œuvre de la première variante uniquement, une réponse positive à l'étape 102 activerait directement l'étape 106 pour passer au message suivant du flux observé.

Une deuxième variante du procédé prend en compte le fait qu'une intrusion peut très bien être réalisée par des messages qui respectent tous les règles de messagerie. Une tentative d'intrusion au moyen de messages validant les règles, est d'autant plus pernicieuse que de tels messages risquent d'être considérés valables et par conséquent traités par les calculateurs jusqu'à déclencher des actions.

Une réponse positive à l'étape 102 active alors une étape 107 qui consiste à accéder en mémoire d'un calculateur embarqué du véhicule à une structure de données qui comporte un langage formel proscrit. On rappelle que, en technique linguistique, un langage formel comprend habituellement un ensemble de mots et un alphabet de symboles qui servent à construire les mots du langage.

Dans la structure de données conforme à l'invention, les symboles de l'alphabet identifient chacun un message conforme à une ou plusieurs spécifications organiques du véhicule, en d'autres termes un message qui valide les règles vérifiées en étapes 102.

A titre purement illustratif et non limitatif, les règles de messagerie sur un bus CAN sont établies pour multiplexer des signaux échangés entre des calculateurs ou par des calculateurs depuis des capteurs ou vers des actionneurs. En absence de multiplexage sur le bus CAN, un câblage des signaux par des fils reliant les calculateurs entre eux et les calculateurs aux capteurs et aux actionneurs, est préétabli dans des spécifications organiques du véhicule. De façon comparable, le multiplexage des signaux sur le bus CAN est préétabli dans des spécifications organiques du véhicule qui associent à chaque signal un message dont l'entête identifie de manière unique le signal et sa priorité de circulation sur le bus. L'identificateur contenu dans l'entête constitue alors le symbole sous forme d'une succession de bits ou d'un codage hexadécimal pour économiser l'espace mémoire.

Fort de l'enseignement illustré ci-dessus pour le réseau CAN, l'homme du métier peut sans difficulté, définir des symboles pour des messages circulant sur tout autre bus équipant un véhicule comme par exemple mais non uniquement un bus LIN ou un bus Ethernet automobile.

L'ensemble de mots du langage proscrit est un ensemble de mots proscrits, en d'autres termes un ensemble de mots qui désignent chacun une séquence interdite de messages circulant sur le réseau embarqué. Plus précisément, les mots proscrits sont extérieurs à un langage formel régulier comprenant le même alphabet de symboles que le langage formel proscrit, c'est à dire des symboles qui désignent chacun un message conforme aux spécifications organiques du véhicule.

Le langage formel régulier comprend un ensemble de mots réguliers qui sont chacun conforme à au moins une spécification fonctionnelle du véhicule. En d'autres termes, les mots réguliers représentent des séquences de messages qu'il est logique de rencontrer lorsque la ou les spécifications fonctionnelles sont correctement exécutées par les circuits électroniques qui pilotent les organes du véhicule et par les calculateurs qui contrôlent et commandent ces circuits électroniques.

A titre purement illustratif, considérons des symboles codés en hexadécimal AF, 1F, F0, F1, A1, 1B qui désigneraient respectivement un signal d'allumage de feux arrière, un signal d'appui sur la pédale de frein, un signal de serrage plaquettes, un signal de vitesse décroissante et un signal de vitesse croissante, un signal de commande d'augmentation d'injection de carburant, les mots 1F-F0-AF-F1 et 1F-AF-F0-F1 peuvent être conformes ou non contraire à une spécification fonctionnelle de freinage du véhicule. Le mot 1F-AF-F0-A1 peut rester un mot régulier conforme à la spécification fonctionnelle par exemple si le véhicule descend une route de montagne. Le mot 1 F-AF-1 B peut alors constituer un mot proscrit.

Une étape 108 consiste à rechercher s'il existe dans le langage proscrit, un mot proscrit défini par une concaténation de chaîne de symboles correspondant à la séquence de messages précédemment observés avec un symbole correspondant au message observé.

Une réponse positive à l'étape 108 active alors l'étape 105 qui détecte l'intrusion potentiellement liée à l'observation du flux qui révèle que le message est prohibé car le symbole qui le désigne est le dernier d'un mot proscrit, correspondant de ce fait à une séquence interdite.

Une réponse négative à l'étape 108 active alors l'étape 106 pour passer au message suivant, aucun mot proscrit n'ayant été détecté.

On peut envisager différentes manières de stockage du langage proscrit en mémoire du calculateur 54 de la figure 2a, des calculateurs 52, 53 de la figure 2b ou du calculateur 51 de la figure 2c par exemple sous forme de listes attribuées chacune à un mot. Il faut cependant prendre garde à l'explosion de place mémoire qui pourrait rapidement être nécessaire, voire physiquement inaccessible, pour stocker la totalité du langage proscrit en mémoire de calculateur embarqué.

Pour rester dans un espace mémoire compatible avec les capacités de stockage des calculateurs embarqués, la structure de données met avantageusement en œuvre le langage numérique proscrit au moyen d'un automate enregistré en mémoire du calculateur embarqué qui exécute le procédé. Chaque état de l'automate est accessible à partir d'un état précédent par une transition validée par un symbole de l'alphabet. Ainsi dans l'étape 107, l'accès est réalisé à un état courant de l'automate. Le symbole associé au message observé valide l'une des transitions qui succède à l'état courant de façon à passer à un état suivant qui est accessible à un prochain passage en étape 107. L'automate comprend un état de départ précédant la première observation de message dans le flux. L'automate comprend au moins un état terminal accessible à partir de l'état de départ, par une ou plusieurs chaînes de transitions validées chacune par une succession de symboles d'un mot proscrit.

L'étape 108 émet alors une réponse positive lorsque l'état terminal est atteint et une réponse négative tant que l'état terminal de l'automate n'est pas atteint.

Pour mettre en oeuvre l'automate, la structure de donnée peut par exemple mais non nécessairement comprendre une liste d'états commençant par l'état de départ et un pointeur de parcours pointant initialement sur l'état de départ. Parmi les éléments de la liste d'état, au moins un état terminal pointe vers un indicateur de réponse positive au test de l'étape 108. Chacun des autres états pointe par exemple sur une liste de transitions matérialisées chacune par un couple dont le premier élément est associé à un symbole de l'alphabet et dont le deuxième élément pointe vers le même ou vers un autre état de la liste d'état. Ainsi, avant chaque activation de l'étape 107, le pointeur de parcours de l'automate pointe sur un état courant qui pointe sur une liste de transitions associée. A l'activation de l'étape 107, la liste de transitions est scrutée jusqu'à détecter le symbole qui désigne le message observé. La détection du symbole provoque une écriture du deuxième élément du couple dans le pointeur de parcours de sorte que le pointeur de parcours pointe alors sur l'état suivant de l'automate.

Dans une mise en œuvre de la deuxième variante uniquement, une réponse négative à l'étape 102 activerait directement l'étape 106 pour passer au message suivant du flux observé.

Les deux variantes ci-dessus exposées peuvent aussi être avantageusement combinées en sortie de l'étape 102 comme le représente la figure 3, de façon à détecter une intrusion tant par des messages validant les règles de messagerie en activant l'étape 107 que par des messages ne validant pas ces règles en activant l'étape 103.

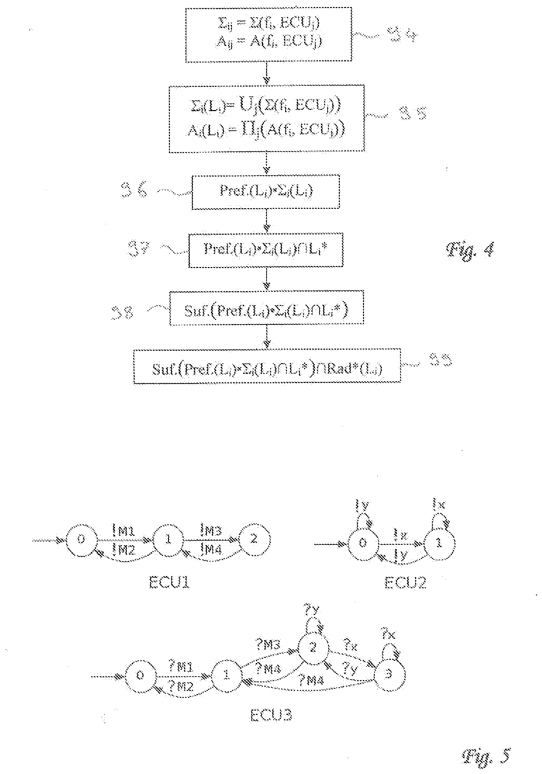

La figure 4 montre des étapes de procédé de production de la structure de données de la deuxième variante du procédé de détection, notamment réalisée au moyen d'un ou plusieurs automates.

Dans une étape 94, on répertorie préalablement les messages échangés entre chaque unité de contrôle électronique (ECU pour Electronic Control Unit) et un bus auquel elle est connectée. Les calculateurs embarqués 11 et 51 à 60 représentés sur les figures 1 à 2c sont des unités de contrôle électronique. Les moyens électroniques 3 de contrôle/commande de freinage mécanique, et les modules électroniques 4 de surveillance de pression des pneus ou tout autre actionneur ou capteur apte à communiquer avec l'un des bus du réseau embarqué, sont aussi des unités de contrôle électronique ECU.

Sur les figures 5 à 7 utilisées pour illustrer la construction progressive de l'automate enregistré pour mettre en œuvre le langage formel proscrit, les cercles représentent des états d'automates et les chiffres que l'on peut y voir à l'intérieur des cercles ne représentent pas des repères au sens des brevets mais des numéros d'ordres des états propres à chaque automate.

En référence à la figure 5, on peut répertorier de différentes manières en étape 94 les messages !M1, !M2, !M3, !M4 qui sont émis par l'unité de contrôle électronique ECU1 sur le bus auquel elle est connectée, les messages !x, !y qui sont émis par l'unité de contrôle électronique ECU2 sur le bus auquel elle est connectée et les messages ?M1, ?M2, ?M3, ?M4, ?x, ?y qui sont reçus par l'unité de contrôle électronique ECU1 sur le bus auquel elle est connectée, un repère de message précédé ici d'un point d'exclamation quand il est émis désigne le même message que celui désigné par le même repère précédé d'un point d'interrogation quand il est reçu.

Parmi les différentes manières de répertorier les messages émis sur et reçus à partir de chaque bus, on peut citer celle consistant à relever avant construction d'un véhicule, les messages dans les spécifications organiques et/ou fonctionnelles, manuellement lorsque les spécifications sont écrites en langage naturel ou automatiquement lorsque les spécifications sont écrites en langage formel standard ou encore celle consistant à relever après construction du véhicule, les messages circulant sur le bus en phase d'essai par exemple au moyen d'un contrôleur de réseau de type largement connu dans le domaine technique considéré.

Une association unique de symbole à chaque message répertorié dans l'étape 94 permet d'élaborer un alphabet $\Sigma_{ij}$ de symboles propre à chaque unité de contrôle électronique ECUj, j variant de 1 à 3 dans le cas très simplifié de la figure 5 mais bien au-delà dans les cas réels de systèmes ordinateur pour contrôler et commander des organes de véhicule automobile et propre à chaque fonction fi exécutée en tout ou partie par l'unité de contrôle électronique considérée.

On construit ensuite en étape 94 des automates élémentaires Aij propres chacun à une unité de contrôle électronique ECUj et à une fonction fi comme ceux représentés en figure 5 avec chacun un état initial 0 correspondant par exemple à la mise sous tension de l'unité de contrôle électronique. Pour simplifier les explications, on considère une seule fonction f1 exécutée en relation avec la figure 5.

Dans l'automate $A_{11}$ de l'unité de contrôle électronique $ECU_1$, l'état initial 0 est associé à une transition reconnue par le symbole de message M1 vers un état 1. L'état 1 est associé à une transition reconnue par le symbole de message M3 vers un état 2 et à une transition reconnue par le symbole de message M2 vers l'état 0. L'état 2 est associé à une transition reconnue par le symbole de message M4 vers l'état 1.

Dans l'automate $A_{12}$ de l'unité de contrôle électronique $ECU_2$, l'état initial 0 est associé à une transition reconnue par le symbole de message x vers un état 1. L'état 1 est associé à une transition reconnue par le symbole de message y vers l'état 0.

Dans l'automate $A_{13}$ de l'unité de contrôle électronique $ECU_3$, l'état initial 0 est associé à une transition reconnue par le symbole de message M1 vers un état 1. L'état 1 est associé à une transition reconnue par le symbole de message M3 vers un état 2 et à une transition reconnue par le symbole de message M2 vers l'état 0. L'état 2 est associé à une transition reconnue par le symbole de message M4 vers l'état 1, à une transition reconnue par le symbole de message y vers lui-même et à une transition reconnue par le symbole de message x vers un état 3. L'état 3 est associé à une transition reconnue par le symbole de message M4 vers l'état 1, à une transition reconnue par le symbole de message x vers lui-même et à une transition reconnue par le symbole de message y vers l'état 2.

Une étape 95 consiste, de préférence au moyen d'une procédure automatique, à créer un alphabet $\Sigma_i(L_i)$ de langage formel régulier $L_i$ associé à chaque fonction $f_i$, égal à l'union des alphabets $\Sigma_{ij}$ sur toutes les unités de contrôle $ECU_j$ exécutant cette fonction.

L'étape 95 consiste notamment à générer un ou plusieurs automates $A_i(L_i)$ qui chacun met en œuvre le langage formel régulier $L_i$ en faisant un produit synchrone des automates élémentaires liés à la fonction $f_i$.

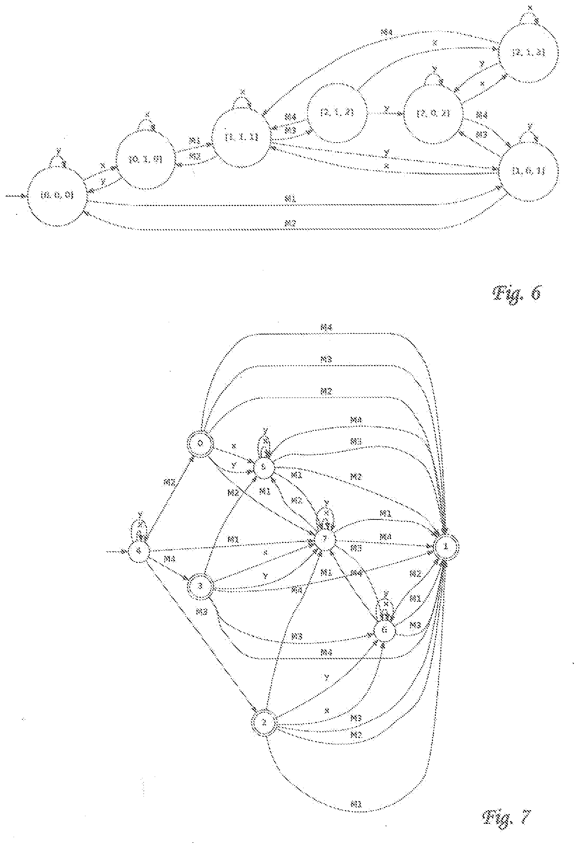

La figure 6 montre un tel automate produit synchrone qui est généré à partir des automates élémentaires de la figure 5. On notera que chaque état résultant de l'automate produit synchrone peut se voir associé à un multiplet d'états des automates élémentaires accédés par une transition commune à la suite d'un état produit précédent.

Une étape 96 consiste dans un premier temps à générer des automates $AP_i(L_i)$ en ajoutant à chaque automate produit synchrone $A_i(L_i)$, un nouvel état vers lequel convergent toutes les transitions possibles, en d'autres termes, celles correspondant à tous les symboles de l'alphabet $\Sigma_i(L_i)$ depuis les états terminaux de l'automate produit $A_i(L_i)$. Nous avons alors des automates $AP_i(L_i)$ reconnaissant chacun un langage $Pref.(L_i) \cdot \Sigma_i(L_i)$ constitué des préfixes des mots réguliers du langage régulier $L_i$, suivis d'un symbole supplémentaire. Certains de ces mots sont aussi des mots du langage régulier $L_i$, d'autres non. Ce sont ces derniers que le procédé de production cherche à récupérer.

Pour ce faire, une étape 97 consiste à générer des automates $APC_i(L_i)$ en calculant l'intersection de chaque nouvel automate $AP_i(L_i)$ avec le complémentaire de l'automate produit $A_i(L_i)$ qui reconnait les mots d'un langage complémentaire $L_i^*$. Ainsi, nous avons des automates $APC_i(L_i)$ reconnaissant chacun un langage $Pref.(L_i) \cdot \Sigma_i(L_i) \cap L_i^*$ constitué des mots du langage $Pref.(L_i) \cdot \Sigma_i(L_i)$ qui appartiennent également au langage complémentaire $L_i^*$, donc qui n'appartiennent pas au langage régulier $L_i$ et qui, par conséquent constituent un ensemble de mots proscrits comprenant un premier ensemble de mots obtenus chacun par une concaténation de préfixe de mot régulier à un symbole de l'alphabet et qui n'appartiennent pas à l'ensemble de mots réguliers.

Chacun des automates $APC_i(L_i)$ reconnaissant le langage proscrit $Pref.(L_i) \cdot \Sigma_i(L_i) \cap L_i^*$ peut alors être enregistré en mémoire de l'un des calculateurs précédemment mentionnés pour permettre ensuite au procédé de détection en temps réel de détecter déjà un certain nombre d'intrusions.

Cependant il reste encore possible d'améliorer la réactivité du système exécutant le procédé de détection ci-dessus exposé en référence à la figure 3. En effet pour que la détection se produise sur la base du langage reconnu par l'automate généré dans l'étape 97, il faut avoir pu observer un parcours de l'automate $APC_i(L_i)$ depuis son état initial sans aucune interruption. Or, il n'est peut-être pas toujours nécessaire d'observer l'intégralité d'une trace relative à la séquence interdite de messages pour constater une anomalie qui ne se produit effectivement que lors de la dernière transition. Il est possible que seules les n dernières transitions rencontrées lors du parcours de l'automate $APC_i(L_i)$ suffisent.

Pour ce faire, une étape 98 consiste à ajouter au premier ensemble de mots proscrits, un deuxième ensemble de mots obtenus en prenant les suffixes de mots du premier ensemble de façon à obtenir un ensemble de mots constitués par les fins des mots du langage proscrit $Pref.(L_i)•\Sigma_i(L_i)∩L_i{}^*$ qui définit le langage proscrit $Suf.(Pref.(L_i)•\Sigma_i(L_i)∩L_i{}^*)$.

Cependant, certains de ces suffixes sont également présents lors d'exécutions légitimes du système. Du point de vue de nos modèles, cela signifie qu'on retrouve les séquences correspondantes à ces suffixes en un endroit de l'automate $APC_i(L_i)$ quel que soit l'état de départ ou l'état d'arrivée. Il est donc important de prendre en compte ce fait lors de la détection en ne levant pas d'alerte tant qu'on n'est pas certain que la séquence observée est bien absente de l'automate originel.

Afin d'éliminer toutes les séquences du système de détection qui ne sont pas interdites, une étape 99 consiste alors à générer des automates exhaustifs $APE_i(L_i)$ de séquences interdites en faisant pour chacun l'intersection de l'automate des suffixes obtenu en étape 98 avec l'automate décrivant le langage $Rad^*(L_i)$ correspondant au complémentaire du langage des radicaux de $L_i$. Les radicaux de $L_i$ sont toutes les séquences que l'on peut trouver dans un mot du langage $L_i$ les préfixes et les suffixes étant des cas particuliers de radicaux. Le complémentaire de leur ensemble contient donc bien toutes les séquences qui ne se retrouvent jamais dans une portion de mot du langage $L_i$.

Chaque automate exhaustif $APE_i(L_i)$ de reconnaissance de séquences interdites est alors enregistré en mémoire d'un calculateur embarqué pour reconnaître un langage proscrit $LP_i$ défini à partir du langage régulier $L_i$ par la formule :

$$LP_i := Suf.\big(Pref.(L_i)•\Sigma_i(L_i)∩L_i{}^*\big)∩Rad^*(L_i)$$

De façon à ne pas détecter une séquence interdite en relation avec une fonction $f_{i1}$ qui serait régulière en relation avec une fonction $f_{i2}$, il est préférable d'imposer en étape 95 aux langages $L_i$ d'être disjoints. Ceci est réalisable, par exemple au moyen du sous-programme suivant :
Si

$$\Sigma_{i1}(L_{i1})∩\Sigma_{i2}(L_{i2}) \neq \varnothing$$

Alors

$$\Sigma_{i1}(L_{i1}) := \Sigma_{i1}(L_{i1})\cup\Sigma_{i2}(L_{i2})$$

Et

$$A_{i1}(L_{i1}) := A_{i1}(L_{i1})•A_{i2}(L_{i2})$$

## Revendications

1. Procédé de détection en temps réel d'intrusion dans un réseau embarqué de communication de véhicule, comprenant des étapes consistant à observer (100) un flux de messages circulant sur ledit réseau embarqué et à détecter une intrusion lorsque le flux observé contient un message prohibé, **caractérisé en ce qu'**il comprend au moins une étape consistant à :

   - accéder (107) en mémoire d'au moins un calculateur embarqué du véhicule, à au moins une structure de données codant des séquences interdites de messages circulant sur ledit réseau embarqué au moyen d'un langage formel proscrit comprenant un alphabet de symboles identifiant chacun un message conforme à une ou plusieurs spécifications organiques du véhicule, la structure de données comportant un ensemble de mots proscrits qui sont extérieurs à un langage formel régulier comprenant le même alphabet de symboles que le langage formel proscrit et un ensemble de mots réguliers chacun conforme à au moins une spécification fonctionnelle du véhicule, ladite structure de données mettant en œuvre ledit langage formel proscrit au moyen d'un automate enregistré en mémoire dudit au moins un calculateur embarqué, comprenant des transitions associées chacune à symbole de l'alphabet et au moins un état terminal accessible par une chaîne de transitions validée par l'un desdits mots proscrits.
   - détecter (108) une intrusion lorsque l'observation du flux révèle un message prohibé comme étant un dernier message de séquence interdite.

2. Procédé selon la revendication 1, dans lequel l'automate enregistré est obtenu préalablement à partir d'un produit synchrone d'automates élémentaires associés chacun à une spécification organique du véhicule.

3. Procédé selon l'une des revendications précédentes, dans lequel l'ensemble de mots proscrits comprend un premier ensemble de mots obtenus chacun par une concaténation de préfixe de mot régulier à un symbole de l'alphabet et qui n'appartiennent pas à l'ensemble de mots réguliers.

4. Procédé selon la revendication 3, dans lequel l'ensemble de mots proscrits comprend un deuxième ensemble de mots obtenus en prenant les suffixes de mots du premier ensemble qui n'appartiennent pas à un ensemble de radicaux de mots réguliers.

5. Procédé selon l'une des revendications précédentes, dans lequel au moins une structure de données accédée en mémoire dudit au moins un calculateur, comporte un compteur de messages non conformes aux spécifications organiques du véhicule associé à un seuil de comptage dont une atteinte ou un dépassement déclare interdite la séquence de messages contenus dans le compteur.

6. Programme de système ordinateur comprenant des instructions de code de programme pour l'exécution des étapes du procédé selon l'une des revendications 1 à 5 lorsque ledit programme est exécuté sur un système ordinateur.

7. Système ordinateur pour contrôler et commander des organes de véhicule automobile comprenant des calculateurs embarqués connectés à un ou plusieurs bus embarqués de communication, **caractérisé en ce qu'**il comprend au moins un calculateur connecté à au moins l'un du ou des bus embarqués et hébergeant tout ou partie du programme de système ordinateur selon la revendication 6.

8. Véhicule automobile (12) **caractérisé en ce qu'**il comporte un système ordinateur selon la revendication 7.

**Patentansprüche**

1. Verfahren zur Erkennung eines Eindringens in ein Bordkommunikationsnetz eines Fahrzeugs in Echtzeit, welches Schritte umfasst zum Beobachten (100) eines in dem Bordnetz fließenden Nachrichtenstroms und zum Erkennen eines Eindringens, wenn der beobachtete Strom eine verbotene Nachricht enthält, **dadurch gekennzeichnet, dass** es wenigstens einen Schritt umfasst zum:

- Zugreifen (107), im Speicher wenigstens eines Bordcomputers des Fahrzeugs, auf wenigstens eine Datenstruktur, die untersagte Nachrichtenfolgen, die in dem Bordnetz fließen, mittels einer unzulässigen formalen Sprache codiert, die ein Alphabet von Symbolen umfasst, die jeweils eine Nachricht identifizieren, die mit einer oder mehreren komponentenbezogenen Spezifikationen des Fahrzeugs konform ist, wobei die Datenstruktur eine Menge von unzulässigen Wörtern, welche nicht zu einer regulären formalen Sprache gehören, die dasselbe Alphabet von Symbolen wie die unzulässige formale Sprache umfasst, und eine Menge von regulären Wörtern, die jeweils mit wenigstens einer funktionalen Spezifikation des Fahrzeugs konform sind, enthält, wobei die Datenstruktur die unzulässige formale Sprache mittels eines im Speicher des wenigstens einen Bordcomputers gespeicherten Automaten einsetzt, welcher Übergänge, die jeweils einem Symbol des Alphabets zugeordnet sind, und wenigstens einen Endzustand, der über eine durch eines der unzulässigen Wörter validierte Kette von Übergängen erreichbar ist, umfasst,
- Erkennen (108) eines Eindringens, wenn die Beobachtung des Stroms zeigt, dass eine verbotene Nachricht eine letzte Nachricht der untersagten Folge ist.

2. Verfahren nach Anspruch 1, wobei der gespeicherte Automat zuvor aus einem synchronen Produkt von elementaren Automaten erhalten wird, die jeweils einer komponentenbezogenen Spezifikationen des Fahrzeugs zugeordnet sind.

3. Verfahren nach einem der vorhergehenden Ansprüche, wobei die Menge von unzulässigen Wörtern eine erste Menge von Wörtern umfasst, die jeweils durch eine Verkettung eines Präfixes eines regulären Wortes mit einem Symbol des Alphabets erhalten werden und die nicht der Menge von regulären Wörtern angehören.

4. Verfahren nach Anspruch 3, wobei die Menge von unzulässigen Wörtern eine zweite Menge von Wörtern umfasst, die erhalten werden, indem die Suffixe von Wörtern der ersten Menge genommen werden, welche nicht einer Menge von Wurzeln von regulären Wörtern angehören.

5. Verfahren nach einem der vorhergehenden Ansprüche, wobei wenigstens eine Datenstruktur, auf die im Speicher des wenigstens einen Computers zugegriffen wird, einen Zähler von nicht mit den komponentenbezogenen Spezifikationen des Fahrzeugs konformen Nachrichten aufweist, der einem Zählschwellenwert zugeordnet ist, bei dessen Erreichen oder Überschreiten die Folge von in dem Zähler enthaltenen Nachrichten für untersagt erklärt wird.

6. Computersystemprogramm, welches Programmcodeanweisungen zur Ausführung der Schritte des Verfahrens nach einem der Ansprüche 1 bis 5, wenn dieses Programm auf einem Computersystem ausgeführt wird, umfasst.

7. Computersystem zum Kontrollieren und Steuern der Komponenten eines Kraftfahrzeugs, welches Bordcomputer umfasst, die an einen oder mehrere Bordkommunikationsbusse angeschlossen sind, **dadurch gekennzeichnet, dass** es wenigstens einen Computer umfasst, der an wenigstens einen des oder der Bordbusse angeschlossen ist und das gesamte Computersystemprogramm nach Anspruch 6 oder einen Teil davon enthält.

8. Kraftfahrzeug (12), **dadurch gekennzeichnet, dass** es ein Computersystem nach Anspruch 7 aufweist.

**Claims**

1. Method for real-time detection of an intrusion into an on-board communication network of a vehicle, comprising steps consisting in observing (100) a stream of messages travelling across said on-board network and in detecting an intrusion when the observed stream contains a prohibited message, **characterized in that** it comprises at least one step consisting in:

   - accessing (107), in the memory of at least one on-board computer of the vehicle, at least one data structure coding forbidden sequences of messages travelling across said on-board network by means of a proscribed formal language comprising an alphabet of symbols each identifying a message which is in accordance with one or more structural specifications of the vehicle, the data structure including a set of proscribed words which are not part of a regular formal language comprising the same alphabet of symbols as the proscribed formal language and a set of regular words each in accordance with at least one functional specification of the vehicle, said data structure implementing said proscribed formal language by means of an automaton stored in the memory of said at least one on-board computer, comprising transitions each associated with a symbol of the alphabet and at least one end state accessible by a transition chain validated by one of said proscribed words,
   - detecting (108) an intrusion when observation of the stream reveals a prohibited message as being a last message of a forbidden sequence.

2. Method according to Claim 1, wherein the stored automaton is obtained in advance on the basis of a synchronous product of elementary automata each associated with a structural specification of the vehicle.

3. Method according to either of the preceding claims, wherein the set of proscribed words comprises a first set of words each obtained by concatenating a prefix of a regular word with a symbol of the alphabet and which do not belong to the set of regular words.

4. Method according to Claim 3, wherein the set of proscribed words comprises a second set of words which are obtained by taking the suffixes of words of the first set which do not belong to a set of roots of regular words.

5. Method according to one of the preceding claims, wherein at least one data structure accessed in the memory of said at least one computer comprises a counter for counting messages which are not in accordance with the structural specifications of the vehicle and which is associated with a counting threshold, reaching or exceeding which declares the sequence of messages which are contained in the counter forbidden.

6. Computer system program comprising program code instructions for carrying out the steps of the method according to one of Claims 1 to 5 when said program is run on a computer system.

7. Computer system for monitoring and controlling motor vehicle units comprising on-board computers which are connected to one or more on-board communication buses, **characterized in that** it comprises at least one computer connected to at least one of the one or more on-board buses and hosting all or part of the computer system program according to Claim 6.

8. Motor vehicle (12), **characterized in that** it includes a computer system according to Claim 7.

*Fig. 1*

EP 3 205 070 B1

*Fig. 2a*

*Fig. 2b*

*Fig. 2c*

13

FIG. 3

$$\Sigma_{ij} = \Sigma(f_i, ECU_j)$$
$$A_{ij} = A(f_i, ECU_j)$$

34

$$\Sigma_i(L_i) = \bigcup_j \left(\Sigma(f_i, ECU_j)\right)$$
$$A_i(L_i) = \prod_j \left(A(f_i, ECU_j)\right)$$

35

36 — $\text{Pref.}(L_i) \times \Sigma_i(L_i)$

37 — $\text{Pref.}(L_i) \times \Sigma_i(L_i) \cap L_i^*$

*Fig. 4*

38 — $\text{Suf.}\left(\text{Pref.}(L_i) \times \Sigma_i(L_i) \cap L_i^*\right)$

$\text{Suf.}\left(\text{Pref.}(L_i) \times \Sigma_i(L_i) \cap L_i^*\right) \cap \text{Rad}^*(L_i)$ — 39

ECU1

ECU2

ECU3

*Fig. 5*

Fig. 6

Fig. 7

**RÉFÉRENCES CITÉES DANS LA DESCRIPTION**

**Documents brevets cités dans la description**

- EP 2040435 B1
- EP 1085447 B1
- EP 2214115 B1
- WO 2013093591 A1
- US 2008052780 A1
- WO 2014009631 A

**Littérature non-brevet citée dans la description**

- **CHECKOWAY et al.** Comprehensive Experimental Analyses of Automotive Attack Surfaces. *USENIX Security,* 10 Août 2011